Europäisches Patentamt

European Patent Office

Office européen des brevets

(11) Numéro de publication: **0 037 322**
**B1**

# FASCICULE DE BREVET EUROPEEN

(45) Date de publication du fascicule du brevet:
27.06.84

(51) Int. Cl.³: **F 16 K 5/06,** F 16 K 5/10

(21) Numéro de dépôt: 81400460.2

(22) Date de dépôt: 24.03.81

(54) **Robinet à boisseau sphérique.**

(30) Priorité: 25.03.80 JP 38497/80

(43) Date de publication de la demande:
07.10.81 Bulletin 81/40

(45) Mention de la délivrance du brevet:
27.06.84 Bulletin 84/26

(84) Etats contractants désignés:
CH DE FR GB IT LI NL SE

(56) Documents cités:
FR - A - 1 391 416
FR - A - 2 057 980
FR - A - 2 387 404
FR - A - 2 470 327
GB - A - 1 200 012
US - A - 3 707 161

(73) Titulaire: Fuji Metal Mfg. Co. Ltd., 3-4, 2-chome Itachibori
Nishi-ku, Osaka (JP)

(72) Inventeur: Mese, Hisayoshi, 2-5-813, 3-chome
Taishibashi, Asahi-ku Osaka (JP)
Inventeur: Kanaya, Shigeo,
1208, A-11, 1-23, Yamada-nishi, Suita Osaka (JP)

(74) Mandataire: Ores, Irène et al, CABINET ORES 6, Avenue
de Messine, F-75008 - Paris (FR)

## Description

La présente invention se rapporte à un robinet à boisseau sphérique, comprenant un corps de robinet et un élément obturateur sphérique disposé dans le corps et qu'on peut faire tourner pour régler le débit de fluide à travers le robinet.

Pour régler le débit d'un fluide au moyen d'un robinet à boisseau sphérique, on fait habituellement tourner l'élément obturateur sphérique à l'intérieur du corps du robinet au moyen d'un levier, par l'intermédiaire de la tige du robinet, afin de modifier la direction du passage de fluide à travers l'élément obturateur sphérique. Le levier doit donc être actionné très progressivement, pour obtenir un réglage fin du débit. Cette manoeuvre délicate du levier est très incommode, de sorte que le débit n'est pas toujours réglable avec précision par une action sur le levier.

Du US-A-3 707 161 est déjà connu un robinet à boisseau sphérique comprenant une soupape interne de réglage de débit, correspondant au préambule de la revendication 1.

A la différence de ce US-A-3 707 161 et selon l'invention on obtient le réglage du débit de la façon suivante: par variation de la section d'entrée du canal incliné ménagé dans l'élément de soupape interne (cette variation étant obtenue par rotation de l'élément obturateur qui contient l'élément de soupape interne) et par variation de la section de sortie du passage de fluide formé entre le siège de l'élément de soupape interne et la surface inclinée opposée à ce siège.

L'invention, telle qu'elle est caractérisée dans la revendication 1, permet un double réglage du débit à l'aide d'une seule pièce, telle que l'élément de soupape interne décrit. Les caractéristiques essentielles dérivent de la combinaison du canal oblique et de la surface oblique ménagés dans cet élément de soupape interne pour créer un passage de fluide réglable en amont et en aval. Cette conception de l'élément de soupape interne élimine la nécessité de disposer d'éléments de soupape internes interchangeables en fonction du calibre du canal de passage du fluide, comme il s'avère nécessaire dans le US-A-3 707 161 pour lequel, en outre, l'opération d'interchangeabilité requiert un certain temps car, pour le remplacement de l'élément de soupape interne, il faut dévisser le manchon dans lequel l'élément de soupape interne est monté à la presse et introduire, toujours à la presse, un autre élément de soupape interne de diamètre différent.

Des modes particuliers de réalisation de l'invention apparaient dans les revendications dépendantes.

Le débit à travers le robinet selon l'invention peut être réglé grossièrement par rotation de l'élément obturateur sphérique, au moyen du levier. D'autre part, le réglage fin du débit est obtenu facilement et avec précision par rotation de l'élément de soupape interne, au moyen d'un tournevis introduit dans la rainure, de manière à déplacer axialement l'élément de soupape interne et augmenter ou diminuer ainsi la largeur d'un passage de réglage de débit formé entre le siège de soupape interne et la surface inclinée.

Grâce à la construction ci-dessus du robinet à boisseau sphérique, le débit peut être réglé beaucoup plus progressivement et finement que dans les dispositifs suivant l'art antérieur. De plus, le débit peut être réglé progressivement et de manière continue sans qu'il soit nécessaire de vidanger le fluide de la canalisation, le robinet à boisseau sphérique restant lui-même raccordé à cette canalisation. Le robinet à boisseau sphérique suivant l'invention est donc très remarquable, en ce qu'il peut avoir de nouvelles applications.

L'invention sera mieux comprise à l'aide du complément de description qui va suivre, qui se réfère aux dessins annexés, dans lesquels:

la fig. 1 est une coupe longitudinale d'un robinet à boisseau sphérique suivant l'invention, dans sa position d'ouverture totale;

la fig. 2 est une vue en plan d'un élément de soupape interne; et

la fig. 3 est une coupe du robinet à boisseau sphérique, dans sa position de fermeture totale.

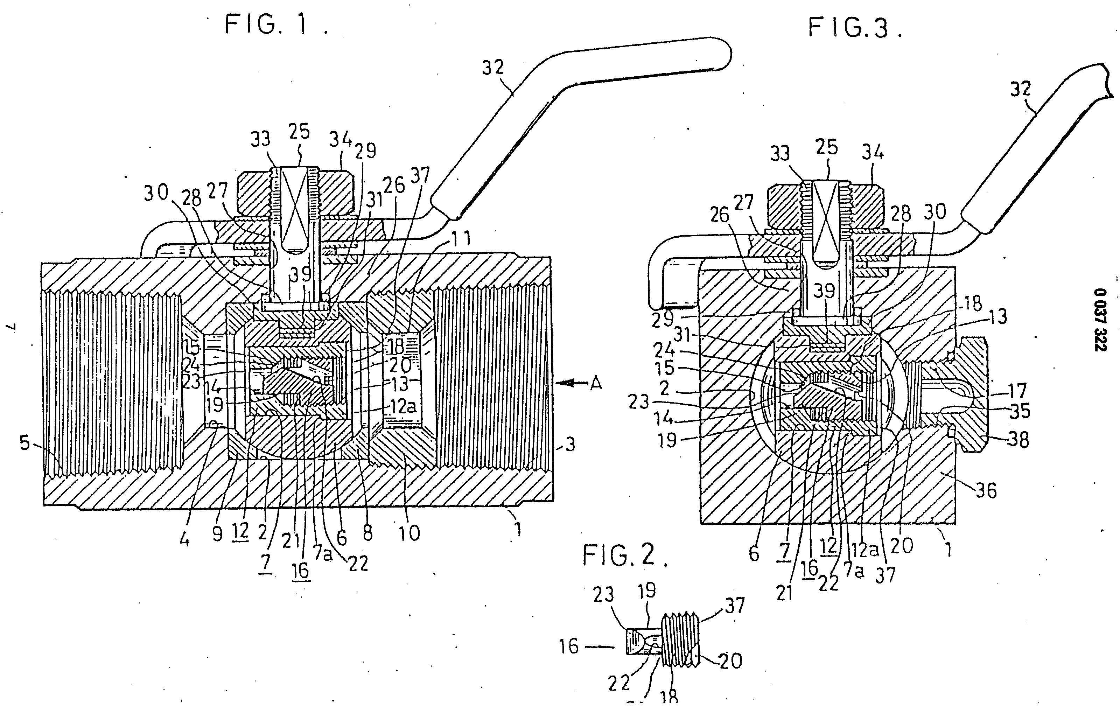

Le robinet à boisseau sphérique suivant l'invention, représenté sur les fig. 1 et 2, comprend un corps de robinet tubulaire 1 qui comporte en son centre un espace intérieur 2, de section transversale circulair. L'expace intérieur 2 est en communication avec une partie taraudée 3, située du côté d'entrée du corps 1 et dont le diamètre est agrandi pour le raccordement à une canalisation. Du côté de sortie du corps, l'espace 2 communique avec une partie taraudée 5, par l'intermédiaire d'un orifice 4 de diamètre réduit. La partie 5 est également prévue pour le raccordement à une autre canalisation.

Un élément obturateur sphérique 6, disposé dans l'espace intérieur 2, est traversé axialement par un alésage horizontal 7. L'alésage 7 comprend une partie d'entrée de plus grand diamètre qui se termine par un épaulement 7a. Les repères 8 et 9 désignent des sièges annulaires d'obturateur. L'élément obturateur sphérique 6 est supporté en rotation par les surfaces intérieures concaves des sièges.

Une pièce 10, filetée extérieurement, permet de régler la pression de contact entre l'élément obturateur sphérique 6, disposé dans l'espace 2, et les deux sièges d'obturateur 8, 9. La pièce de réglage 10 est traversée axialement par un passage de fluide 11, de section transversale hexagonale. La pièce 10 est vissée dans la partie taraudée 3 par rotation au moyen d'un outil, une clé par exemple, introduit dans le passage de fluide 11.

Un manchon 12 de soupape interne est emmanché à la presse dans l'alésage 7 à partir du côté de sortie. Le manchon 12 comporte une extrêmité d'entrée 12a de plus grand diamètre, qui vient en contact avec l'épaulement 7a de l'alésage 7. Le manchon 12 de soupape interne comprend une partie taraudée 13 de grand diamètre, à son côté d'entrée, une partie alésée de guidage 14 de petit diamètre, à son côté de sortie, et un siège 15 de soupape interne, situé entre les deux parties précédentes et qui présente une surface intérieure cônique.

La fig. 2 représente un élément (16) de soupape interne, disposé à l'intérieur du manchon 12 de soupape interne et comprenant une tête 18, filetée extérieurement, et une tige cylindrique 19, qui part de l'extrêmité de sortie de la tête 18. Cette dernière présente, à son côté d'entrée, une face 37 d'extrêmité de manoeuvre, dans laquelle est formée une rainure 20 d'introduction de tournevis qui passe par le centre de la face d'extrêmité. La tête 18 comporte à l'intérieur un canal incliné 22 pour le fluide, qui part du centre de la face 37 d'extrêmité de manoeuvre et aboutit à une partie épaulée 21 délimitée par la tête 18 et la tige 19. La tige 19 est biseautée sur un côté de sa partie d'extrêmité avant, de manière à former une surface inclinée 23 opposée au siège 15 de soupape interne et allant de la sortie du canal de fluide 22 au centre de la face d'extrêmité avant de la tige 19. La tête 18 de l'élément 16 de soupape interne, ayant la configuration ci-dessus, est vissée dans la partie taraudée 13, la tige 19 de l'élément 16 étant introduite dans la partie alésée 14 de guidage. Ainsi, l'élément de soupape 16 peut être déplacé axialement à l'intérieur du manchon 12 de soupape interne. Un passage 24 de réglage de débit est formé entre le siège 15 de soupape interne et la surface inclinée 23. La largeur du passage 24 peut être réglée par déplacement axial de l'élément 16 de soupape interne. Le manchon 12, portant le siège de soupape 15, et l'élément 16 de soupape interne constituent un dispositif de soupape interne pour le réglage du débit à travers le robinet à boisseau sphérique.

Une tige de robinet 25 traverse de façon tournante un alésage vertical 27 prévu dans la paroi supérieure 26 du corps de robinet 1. La tige 25 comporte à son extrêmité inférieure une collerette 28 qui est située du côté intérieur de la paroi supérieure 26. Un joint torique 29, entourant la tige de robinet 25 à l'extrêmité inférieure de l'alésage vertical 27, est interposé entre la collerette 28 et la paroi supérieure 26. Une pièce de fixation 30, en forme de coupelle, accouple l'extrêmité inférieure de la tige de robinet 25 à la partie supérieure de l'élément obturateur sphérique 6. La pièce 30 comporte un prolongement inférieur 39, de section transversale carrée. Un logement vertical 31, de section transversale carrée semblable, est formé à la partie supérieure de l'élément obturateur sphérique 6. La collerette 28 est ajustée solidairement dans la pièce de fixation 30 et le prolongement 39 est ajusté étroitement dans le logement 31. De cette façon, la tige de robinet 25 est accouplée à l'élément obturateur sphérique 6 par la pièce de fixation 30.

Un levier de manoeuvre 32 est fixé, par un écrou 34, à une partie d'extrêmité supérieure 33, filetée extérieurement, de la tige de robinet 25 qui fait saillie vers le haut à l'extérieur de la paroi supérieure 26.

On voit, sur la fig. 3, qu'une paroi latérale 36 du corps de robinet 1 comporte un orifice taraudé 35, pour le passage d'une tige de manoeuvre du dispositif de soupape interne. Lorsque l'élément obturateur sphérique 6 se trouve dans sa position de fermeture totale, la face 37 d'extrêmité de manoeuvre de l'élément 16 de soupape interne est située en face de l'orifice 35. L'orifice taraudé 35 a une dimension telle que l'élément 16 de soupape interne peut facilement passer par cet orifice. Un bouchon 38 de fermeture de l'orifice taraudé 35 comporte, à son extrêmité avant, une partie filetée 17 qui se visse de façon démontable dans l'orifice 35.

Le robinet à boisseau sphérique suivant l'invention peut être utilisé comme décrit ci-après.

Lorsque l'élément obturateur sphérique 6 se trouve dans sa position d'ouverture totale, comme représenté sur la fig. 1, le fluide qui circule dans le sens de la flèche A traverse le passage 11 de la pièce filetée de réglage 10, puis le canal de fluide 22 de l'élément 16 de soupape interne, d'où il débouche vers le passage 4 de petit diamètre, par l'intermédiaire du passage 24 de réglage de débit. Le réglage grossier du débit est obtenu par rotation de l'élément obturateur sphérique 6, au moyen du levier de manoeuvre 32.

Le réglage fin du débit est effectué comme suit.

Tout d'abord, le fluide est évacué de la canalisation et le robinet à boisseau sphérique lui-même est enlevé de la canalisation. L'élément obturateur 6 est ensuite tourné dans sa position d'ouverture totale, au moyen du levier 32, et on introduit dans le robinet un tournevis à bord droit, par la partie taraudée d'entrée 3, de manière à placer l'extrêmité du tournevis dans la rainure 20 de l'élément 16 de soupape interne. On fait alors tourner l'élément 16 de manière à le déplacer vers l'avant ou vers l'arrière, ce qui augmente ou diminue la largeur du passage de réglage de débit. Après avoir ainsi réglé la largeur du passage, on raccorde de robinet à boisseau sphérique lui-même à la canalisation et on mesure le débit. Cette procédure est répétée plusieurs fois afin d'obtenir le débit désiré, avec précision.

Lorsque le débit ainsi fixé n'a pas besoin d'être modifié pendant une longue durée, le procédé ci-dessus convient parfaitement mais, lorsqu'il est nécessaire de modifier souvent le débit, ce procédé n'est pas pratique puisque le robinet à boisseau doit être démonté puis remis en place chaque fois qu'on procède au réglage. Dans un tel cas, le débit est réglé de la façon suivante. Tout d'abord, on fait tourner l'élément obturateur sphérique 6 à sa position de fermeture totale, au moyen du levier 32 et on enlève le bouchon 38 de l'orifice taraudé 35. On introduit ensuite un tournevis dans le robinet, par l'orifice 35, et on place l'extrémité du tournevis dans la rainure 20, afin de faire tourner l'élément 16 de soupape interne de la même façon que précédemment. Après réglage de la largeur du passage 24 de réglage de débit, l'orifice 35 est à nouveau obturé par le bouchon 38, on ramène l'élément obturateur sphérique 6 à sa position d'ouverture totale et on mesure le débit. Cette procédure est également répétée plusieurs fois, pour obtenir avec précision le débit désiré. Puisque l'élément obturateur sphérique est dans sa position de fermeture totale lorsque l'élément 16 de soupape interne est manoeuvré selon le dernier procédé décrit, celui-ci ne nécessite pas les opérations incommodes de vidange du fluide de la canalisation, ou de démontage du robinet lui-même de la canalisation.

La rainure d'introduction du tournevis peut être en forme de croix, et dans ce cas il est préférable d'utiliser un tournevis à extrémité en croix.

Ainsi que cela ressort de ce qui précède, l'invention ne se limite nullement à deux de ses modes de réalisation et d'application qui viennent d'être décrits de façon plus explicite; elle en embrasse au contraire toutes les variantes qui peuvent venir à l'esprit du technicien en la matière sans s'écarter du cadre, ni de la portée de la présente invention.

**Revendications**

1. Robinet à boisseau sphérique, comprenant un corps de robinet (1), qui comporte en son centre un espace intérieur (2) et qui est ouvert à ses extrémités opposées (3, 5), un élément obturateur sphérique (6) disposé dans l'espace intérieur (2) et traversé par un alésage horizontal (7), un siège d'obturateur (8, 9) qui supporte en rotation l'élément obturateur sphérique (6), une tige de robinet (25) fixée à la partie supérieure de l'élément obturateur sphérique (6) et munie d'un levier de manoeuvre (32) à son extrémité qui fait saillie à l'extérieur du corps de robinet (1), un dispositif de soupape interne de réglage de débit, prévu dans l'alésage horizontal (7), ledit dispositif de soupape interne comportant un manchon cylindrique (12) de soupape interne, fixé dans l'alésage horizontal (7) et un siège (15) de soupape interne, ainsi qu'un élément (16) de soupape interne mobile axialement et disposé à l'intérieur du manchon (12) de soupape interne, lequel robinet permet de réaliser le réglage fin de débit dans sa position de fermeture totale, caractérisé en ce que le manchon (12) de soupape interne comprend une partie taraudée (13), de grand diamètre, à son côté d'entrée, une partie alésée (14) de guidage, de petit diamètre, à son côté de sortie, et une partie intermédiaire située entre les parties précédentes et comportant une surface intérieure conique qui constitue le siège (15) de soupape interne, en ce que l'élément de soupape (16) comprend une tête (18), filetée extérieurement, vissée dans la partie taraudée (13), et une tige cylindrique (19) qui part d'une extrémité de la tête (18) vers le côté de sortie et qui pénètre dans la partie alésée de guidage (14), la tête étant traversée par un canal incliné (22) de passage de fluide, la tige (19) comportant une surface inclinée (23) opposée au siège interne (15), et en ce qu'un passage variable (24) de réglage de débit, placé en aval par rapport audit canal incliné (22), est formé entre le siège (15) de soupape interne et la surface inclinée (23), la largeur de ce passage (24) de réglage de débit étant réglable par le déplacement axial de l'élément (16) de soupape interne.

2. Robinet suivant la revendication 1, caractérisé en ce que la face d'extrémité arrière (37) de la tête (18) comporte une rainure (20) d'introduction d'un tournevis.

3. Robinet suivant l'une quelconque des revendications 1 et 2, caractérisé en ce qu'une paroi latérale (36) du corps de robinet comporte un orifice (35) pour le passage d'une tige de manoeuvre de l'élément (16) de soupape interne, cet orifice de la paroi latérale étant situé en face de l'extrémité rainurée (37) de l'élément de soupape interne lorsque l'élément obturateur sphérique (6) se trouve dans sa position de fermeture complète, l'orifice de la paroi latérale étant obstrué par un bouchon démontable (38).

4. Robinet suivant la revendication 3, caractérisé en ce que l'orifice de la paroi latérale est un orifice taraudé et en ce que le bouchon comporte une partie (17) filetée extérieurement.

**Patentansprüche**

1. Kugelhahn mit einem Hahnkörper (1), der in seiner Mitte einen Innenraum (2) aufweist und an seinen gegenüberliegenden Enden (3, 5) geöffnet ist, mit einem kugelförmigen Verschlußteil (6), das im Innenraum (2) angeordnet ist und von einer Horizontalbohrung (7) durchquert wird, mit einem Verschlußteilsitz (8, 9), in dem das Verschlußteil (6) drehbar gelagert ist, mit einem Hahnschaft (25), der oben am Verschlußteil (6) befestigt und an seinem Ende mit einem nach außen über den Hahnkörper (1) hinausragenden Betätigungshebel (32) versehen ist, mit einer in der Horizontalbohrung (7) vorgesehenen Innenventilvorrichtung zur Regulierung des Durchflusses, wobei die Innenventilvorrichtung eine in der Horizontalbohrung (7) befestigte Zylinderbuchse (12) und einen Innenventilsitz (15) aufweist, und mit einem im Inneren der Innenventil-Zylinderbuchse (12) axial beweglichen Innenventilelement (16), wobei der Hahn eine genaue Dosierung des Durchflusses in der völlig gesperrten Stellung erlaubt, dadurch gekennzeichnet, daß die Innenventil-Zylinderbuchse (12) an der Eintrittsseite einen Gewindeabschnitt (13) großen Durchmessers, an der Austrittsseite eine Führungsbohrung (14) kleinen Durchmessers und zwischen den beiden vorgenannten Teilen einen Zwischenabschnitt aufweist, der über eine konische Innenfläche verfügt, die den Sitz (15) des Innenventils bildet, daß das Innenventil (16) über einen mit einem Außengewinde versehenen Kopf (18), der in den Gewindeabschnitt (13) eingeschraubt ist, sowie einen Zylinderzapfen (19) verfügt, der sich ausgehend vom Kopf (18) zur Austrittsseite erstreckt und in die Führungsbohrung (14) hineinragt, wobei der Kopf von einem geneigten Durchgangskanal (22) durchzogen ist und der Zylinderzapfen (19) gegenüber dem inneren Sitz (15) eine schräg verlaufende Fläche (23) aufweist, und daß zwischen dem Sitz (15) des Innenventils und der schräg verlaufenden Fläche (23) stromabwärts in bezug auf den geneigten Durchgangskanal (22) ein veränderbarer Durchlaß (24) zur Durchflußregulierung gebildet ist, wobei die Größe des Durchlasses (24) zur Durchflußregulierung durch axiales Verstellen des Innenventilelementes (16) regulierbar ist.

2. Kugelhahn nach Anspruch 1, dadurch gekennzeichnet, daß die Rückseite (37) des Kopfes (18) mit einer Nut (20) zum Einführen eines Schraubenziehers versehen ist.

3. Kugelhahn nach einem der Ansprüche 1 oder 2, dadurch gekennzeichnet, daß die Seitenwand (36) des Hahnkörpers eine Öffnung (35) zum Durchführen eines Betätigungsschaftes für das Innenventilelement (16) aufweist, wobei die Öffnung in der Seitenwand gegenüber der mit einer Nut versehenen Endfläche (37) des Innenventilelementes liegt, wenn sich das kugelförmige Verschlußteil (6) in der völlig gesperrten Stellung befindet, und daß die Seitenwand durch einen abnehmbaren Stopfen (38) verschließbar ist.

4. Kugelhahn nach Anspruch 3, dadurch gekennzeichnet, daß die Öffnung ein Innengewinde aufweist und daß auf dem Stopfen ein Abschnitt (17) mit einem Außengewinde vorgesehen ist.

**Claims**

1. A ball valve comprising a valve case forming an internal space that is centrally extending to opposite inlet and outlet sides, a ball valve element disposed within the interior space and having a bore extending therethrough, a valve seat rotatably supporting the ball valve element, a valve stem fixed to one side of the ball valve element and having an operating lever at one end of the valve stem projecting therefrom outside the valve case, a flow adjusting internal valve assembly means, provided in the bore, comprising an internal cylindrical valve casing in the bore and having an internal valve seat portion, and an axially movable internal valve element disposed within the internal cylindrical valve casing, said ball valve allowing a fine flow adjusting in its fully closed position, wherein the internal cylindrical valve casing comprises an internally threaded large-diameter portion at its inlet side, a small-diameter guide bore portion at its outlet side and an intermediate portion positioned there-between and having a tapered inner surface providing the internal valve seat portion, wherein the internal valve element comprises an externally threaded head screwed in the internally threaded portion and a cylindrical leg extending from one end of the head toward the outlet side and inserted into the guide bore portion, the head being formed with a slanting fluid channel, the leg having a slanting surface opposed to the internal valve seat portion, and wherein a variable flow adjusting passage, positioned downstream in comparison with said slanting fluid channel, is provided between the internal valve seat portion and the slanting surface, the width of the flow adjusting passage being adjustable by the axial movement of the internal valve element.

2. A ball valve as defined in claim 1, wherein the head has a screwdriver fitting groove in its backward end face.

3. A ball valve as defined in any one of claims 1 and 2, wherein the valve case is formed in a side wall thereof with a bore for passing therethrough a rod for operating the internal valve element, the side wall bore being positioned in opposed relation to the grooved end face of the internal valve element when the ball valve element is in its fully closed position, the side wall bore being closed with a detachable plug.

4. A ball valve as defined in claim 3, wherein the side wall bore is a threaded bore and the plug has an externally threaded portion.

FIG.1.

FIG.3.

FIG.2.